# DEMANDE DE BREVET EUROPEEN

(11) **EP 2 394 912 A1**
(43) Date de publication de la demande: **14.12.2011**
(21) Numéro de dépôt: 11169001.2
(22) Date de dépôt: 07.06.2011
(51) Int. Cl.: B64C 25/40, F16D 11/14

(54) **Dispositif de déplacement autonome pour aéronef**

(30) Priorité: 10.06.2010 FR 1054605
(71) Demandeur: Messier-Bugatti-Dowty, 78140 Velizy Villacoublay (FR)
(72) Inventeur: Charuel, Hervé, 91620 NOZAY (FR); Delloue, David, 92350 LE PLESSIS-ROBINSON (FR)
(74) Mandataire: Parzy, Benjamin Alain

(57) **Abrégé**

L'invention est relative à un dispositif de déplacement autonome pour aéronef, comportant un organe moteur (10), des moyens d'entraînement (12) en rotation d'une roue d'aéronef qui sont adaptés à coopérer avec ladite roue pour entraîner celle-ci en rotation, et des moyens d'accouplement (21,22) interposés entre l'organe moteur et les moyens d'entraînement pour accoupler sélectivement la roue à l'organe moteur, les moyens d'accouplement comportant deux organes d'accouplement (21,22) de forme complémentaire dont un premier organe d'accouplement (22) est solidaire en rotation des moyens d'entraînement et un deuxième organe d'accouplement (21) est solidaire en rotation de l'organe moteur. Le dispositif de déplacement autonome comporte des moyens de mesure (23,24) pour générer une information représentative d'une vitesse relative de rotation du deuxième organe d'accouplement par rapport au premier organe d'accouplement, le dispositif étant associé à des moyens de commande du moteur adaptés à faire tourner celui-ci de sorte de sorte à annuler la vitesse de rotation relative entre les organes d'accouplement préalablement à leur accouplement.

## Description

L'invention concerne un dispositif de déplacement autonome pour aéronef.

### ARRIERE-PLAN TECHNOLOGIQUE DE L'INVENTION

Les constructeurs aéronautiques se préoccupent de plus en plus d'économie de carburant. Des études font apparaître qu'il pourrait être souhaitable de déplacer l'aéronef au sol uniquement à l'aide de dispositifs de déplacement autonomes, hydrauliques ou électromécaniques, comportant chacun un organe moteur susceptible d'entraîner l'une des roues de l'aéronef, de sorte à déplacer l'aéronef sans l'aide des propulseurs de celui-ci.

Les moteurs équipant ces dispositifs de déplacement autonomes doivent être le plus léger possible, et il est donc tentant d'utiliser un réducteur entre le moteur et la roue à entraîner, ce qui permet une réduction de couple appréciable. Cependant, dans certaines phases, la roue est motrice et peut entraîner le moteur du dispositif de déplacement autonome. C'est par exemple le cas lors d'un décollage ou d'un atterrissage. Compte tenu de la présence du réducteur, le moteur peut être ainsi amené à tourner à une vitesse importante, peu compatible avec la durée de vie et le dimensionnement du moteur. L'usage d'un organe d'accouplement s'impose donc entre le moteur et la roue, afin de pouvoir déconnecter le moteur de la roue lors de ces phases.

L'usage d'un organe d'accouplement à friction semble peu indiqué, compte tenu de l'important couple à passer et du peu d'espace disponible pour loger un tel organe.

Il est possible d'utiliser des organes d'accouplement à obstacle, par exemple un organe d'accouplement à crabot, qui permettent de passer des couples importants dans un encombrement réduit. Cependant, l'accouplement nécessite un arrêt de l'aéronef pour permettre aux obstacles en regard de s'interpénétrer sans dommage, ce qui représente un inconvénient dans certaines circonstances, notamment lorsque le pilote peut évacuer la piste d'atterrissage sans freiner, donc a fortiori sans s'arrêter.

### OBJET DE L'INVENTION

L'invention a pour objet un dispositif de déplacement autonome et une roue associée pour aéronef, permettant d'éviter l'arrêt précité.

### BREVE DESCRIPTION DE L'INVENTION

L'invention a pour objet un dispositif de déplacement autonome pour aéronef, comportant un organe moteur, des moyens d'entraînement en rotation d'une roue d'aéronef qui sont adaptés à coopérer avec ladite roue pour entraîner celle-ci en rotation, et des moyens d'accouplement interposés entre l'organe moteur et les moyens d'entraînement pour accoupler sélectivement les moyens d'entraînement à l'organe moteur, les moyens d'embrayage comportant deux organes d'accouplement de forme complémentaire dont un premier organe d'accouplement est solidaire en rotation des moyens d'entraînement et un deuxième organe d'accouplement est solidaire en rotation de l'organe moteur. Selon l'invention, le dispositif de déplacement autonome comporte des moyens pour générer une information représentative d'une vitesse relative de rotation du deuxième organe d'accouplement par rapport au premier organe d'accouplement et des moyens de commande du moteur adapté à faire tourner celui-ci de sorte de sorte à annuler la vitesse de rotation relative entre les organes d'accouplement préalablement à leur accouplement.

Ainsi, lorsqu'après un atterrissage, on désire accoupler les organes moteurs aux roues correspondantes, on commande les moyens de synchronisation pour faire tourner, à l'aide des organes moteurs, les deuxièmes organes d'accouplement à la vitesse des premiers organes d'accouplement qui est imposée par la rotation des roues. Les deux organes tournent ainsi à la même vitesse, et sont donc immobiles en rotation relativement l'un à l'autre. Ils peuvent être ainsi facilement accouplés, sans nécessiter l'arrêt de l'aéronef.

### BREVE DESCRIPTION DES FIGURES

L'invention sera mieux comprise à la lumière de la description qui suit en référence aux figures des dessins annexés parmi lesquelles :

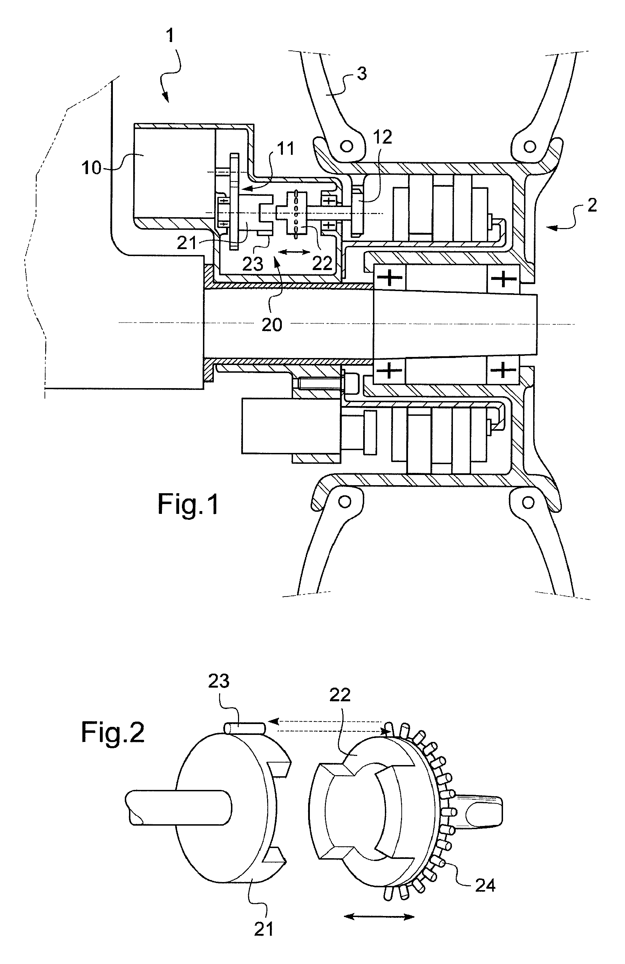

- la figure 1 est une vue schématique du bas d'un atterrisseur dont les roues sont associées à un dispositif de déplacement autonome selon un mode particulier de réalisation de l'invention ;
- la figure 2 est une vue en perspective schématique des moyens d'accouplement du dispositif de déplacement autonome illustré à la figure 1

### DESCRIPTION DETAILLEE DES FIGURES

L'invention s'applique à un aéronef équipé d'atterrisseurs portant des roues dont au moins certaines sont équipées d'un dispositif de déplacement autonome 1 qui permet de faire tourner la roue 2 associée pour déplacer l'aéronef sans l'aide des propulseurs de l'aéronef. Parmi les solutions proposées, l'invention s'intéresse plus particulièrement aux dispositifs de déplacement autonome comportant un moteur électrique 10 associé à un réducteur 11. La sortie du réducteur 11 attaque un pignon 12 d'entrainement de la roue 2 en rotation par l'intermédiaire de moyens d'accouplement 20 comportant deux organes d'accouplement 21,22, dont l'un est entraîné par le moteur électrique 10 et l'autre solidaire en rotation du pignon d'entraînement 12.

Lors de l'atterrissage de l'aéronef, le pneumatique 3 porté par la roue 2 prend contact avec le sol et la roue se met à tourner de sorte que sa vitesse circonférentielle coïncide avec la vitesse longitudinale de l'aéronef. En fin d'atterrissage, le pilote profite généralement de l'inertie de l'aéronef pour le déplacer sur l'aéroport et le diriger vers l'aérogare désignée par le contrôle de l'aéroport. Cependant, il convient de lutter contre les divers frottements qui ralentissent l'aéronef.

A cette fin, on connecte selon l'invention le moteur 10 du dispositif de déplacement autonome à la roue de la façon suivante. Le dispositif de déplacement autonome est équipé de moyens pour mesurer une vitesse de rotation relative entre les deux organes d'accouplement. Selon une réalisation particulière illustrée ici, l'organe d'accouplement 21 est équipé d'un émetteur/récepteur optique 23 émettant un rai de lumière en direction de l'autre organe d'accouplement 22. Celui-ci est équipé d'une série de réflecteurs 24, disposés circonférentiellement sur l'organe d'accouplement 22 pour être successivement en regard de l'émetteur/récepteur optique 23 lors d'une rotation relative des organes d'accouplements 21, 22.

Alors que l'organe d'accouplement 21 qui est solidaire du moteur 10 est immobile en rotation et que l'organe d'accouplement 22 qui est solidaire de la roue 2 tourne avec cette dernière, la rotation relative des deux organes d'accouplement provoque des réflexions successives du rayon lumineux émis par l'émetteur récepteur 23, à une fréquence dépendant de la vitesse relative. Le signal réfléchi est détecté par l'émetteur-récepteur, et est traité par des moyens analogiques ou numériques adéquats pour en extraire une information quant à la fréquence de réflexion représentative de la vitesse relative de rotation des deux organes d'accouplement. Cette information de fréquence est utilisée pour générer une consigne d'alimentation du moteur électrique 10, de sorte que celui-ci se mette à tourner et donc faire tourner l'organe d'accouplement 21 associé jusqu'à ce que la fréquence surveillée soit nulle ou très faible. Dans cette configuration, le moteur électrique 10 du dispositif de déplacement autonome entraîne l'organe d'accouplement 21 associé sensiblement à la même vitesse de rotation que celle de l'autre organe d'accouplement 22. On peut dès lors faire coopérer les deux organes d'accouplement pour connecter le moteur électrique à la roue. A cet effet, l'organe d'accouplement 22 est déplacé longitudinalement par tout moyen connu, par exemple ders moyens électromagnétiques pour craboter l'autre organe d'accouplement. L'organe d'accouplement 22 est de préférence lié à l'arbre sur lequel il coulisse par l'intermédiaire d'une liaison à cannelures.

L'accouplement se fait ainsi sans heurt, à la volée, sans nécessité d'arrêter l'aéronef. Cet accouplement est de préférence commandé dès que la vitesse longitudinale de l'aéronef descend en deçà d'un premier seuil V1 prédéterminé. Le désaccouplement sera lui commandé dès que la vitesse augmente au delà d'un deuxième seuil V2 prédéterminé de préférence supérieur au premier seuil.

L'invention n'est pas limitée à ce qui vient d'être décrit, mais englobe au contraire toute variante entrant dans le cadre défini par les revendications.

En particulier, bien que la synchronisation des vitesses de rotations des deux organes d'accouplement se fasse ici au moyen d'un capteur adapté à mesurer une vitesse de rotation relative, on pourra bien sûr réaliser cette synchronisation à l'aide de toute information permettant d'estimer la vitesse de rotation relative des deux organes d'accouplement. Par exemple, on pourra utiliser l'information de position angulaire tirée d'un capteur de position angulaire du moteur, pour en déduire une vitesse de rotation de l'organe d'accouplement associé, et comparer cette information à une information de vitesse angulaire de l'autre organe d'accouplement, par exemple obtenue à l'aide d'un encodeur lié à cet organe d'accouplement. Cette disposition nécessite cependant l'utilisation de deux informations qu'il faut comparer entre elles, ce qui est moins intéressant, que de mesurer directement, comme dans le mode de réalisation illustré, une information de vitesse de rotation relative entre les deux organes.

Bien que dans l'exemple illustré, le capteur utilisé est un capteur optique, on pourra bien sûr utiliser tout autre type de capteur, comme un capteur magnétique.

## Revendications

1. Dispositif de déplacement autonome pour aéronef, comportant un organe moteur (10), des moyens d'entraînement (12) en rotation d'une roue d'aéronef qui sont adaptés à coopérer avec ladite roue pour entraîner celle-ci en rotation, et des moyens d'accouplement (21,22) interposés entre l'organe moteur et les moyens d'entraînement pour accoupler sélectivement la roue à l'organe moteur, les moyens d'accouplement comportant deux organes d'accouplement (21,22) de forme complémentaire dont un premier organe d'accouplement (22) est solidaire en rotation des moyens d'entraînement et un deuxième organe d'accouplement (21) est solidaire en rotation de l'organe moteur, le dispositif de déplacement autonome comportant des moyens de mesure (23,24) pour générer une information représentative d'une vitesse relative de rotation du deuxième organe d'accouplement par rapport au premier organe d'accouplement, le dispositif étant associé à des moyens de commande du moteur adaptés à faire tourner celui-ci de sorte à annuler la vitesse de rotation relative entre les organes d'accouplement préalablement à leur accouplement, **caractérisé en ce que** les moyens de mesure comportent un émetteur récepteur optique (23) monté sur l'un des organes d'accouplement pour envoyer un rayon lumineux vers des réflecteurs disposés sur l'autre des organes d'accouplement.

2. Procédé de couplage d'un dispositif de déplacement autonome pour aéronef à une roue associée, le dispositif comportant un organe moteur (10), des moyens d'entraînement (12) en rotation d'une roue d'aéronef qui sont adaptés à coopérer avec ladite roue pour entraîner celle-ci en rotation, et des moyens d'accouplement (21,22) interposés entre l'organe moteur et les moyens d'entraînement pour accoupler sélectivement la roue à l'organe moteur, les moyens d'accouplement comportant deux organes d'accouplement (21,22) de forme complémentaire dont un premier organe d'accouplement (22) est solidaire en rotation des moyens d'entraînement et un deuxième organe d'accouplement (21) est solidaire en rotation de l'organe moteur, le dispositif comportant des moyens de mesure (23,24) afin de générer une information représentative d'une vitesse relative de rotation du deuxième organe d'accouplement par rapport au premier organe d'accouplement, le procédé comportant l'étape de faire tourner au moyen de l'organe moteur l'organe d'accouplement associé à la même vitesse que l'organe d'accouplement associé à la roue préalablement à leur accouplement, **caractérisé en ce que** le procédé comporte l'étape d'utiliser comme moyens de mesure un émetteur récepteur optique (23) monté sur l'un des organes d'accouplement pour envoyer un rayon lumineux vers des réflecteurs disposés sur l'autre des organes d'accouplement.

3. Procédé selon la revendication 2, dans lequel le couplage est commandé quand la vitesse de l'aéronef descend en deçà d'un premier seuil de vitesse (V1).

4. Procédé selon la revendication 2, dans lequel le couplage est désactivé quand la vitesse de l'aéronef augmente au-delà d'un deuxième seuil de vitesse (V2) supérieur au premier seuil de vitesse (V1).
